# EUROPEAN PATENT SPECIFICATION

(11) **EP 3 686 263 B1**
(45) Date of publication and mention of the grant of the patent: **01.01.2025**
(21) Application number: 19199239.5
(22) Date of filing: 24.09.2019
(51) Int. Cl.: C10G 31/08, C10G 31/09, C10G 31/10, C10G 33/00, C10G 53/02, B01D 17/00, B01D 17/02, B01D 17/12

(54) **SLOP OIL TREATING DEVICE**
ALTÖLBEHANDLUNGSVORRICHTUNG
DISPOSITIF DE TRAITEMENT D'HUILES DE REJETS

(30) Priority: 26.01.2019 CN 201910075633
(43) Date of publication of application: 29.07.2020
(73) Proprietor: Xinchang technology Co., Ltd., Cangzhou City, Hebei Province (CN)
(72) Inventor: LI, Fei, Cangzhou, Hebei (CN); WANG, Ping, Cangzhou, Hebei (CN)
(74) Representative: Bayramoglu et al.

(56) References cited:
- WO-A1-2017/196234
- CN-A- 101 602 566
- CN-A- 102 039 301
- CN-A- 103 013 557
- CN-A- 105 417 906
- US-A- 4 707 275
- US-A1- 2002 003 115

## Description

### Technical Field

The present invention relates to the technical field of slop oil treatment, in particular to a slop oil treating device.

### Background

Slop oil, also known as aged oil in the petrochemical industry, is an emulsified oil-water mixture with an extremely high stability, and generally, the basic sediment and water (BS&W) content of the slop oil ranges from 15% to 80%. This strong emulsion is not sensitive to chemical reagents, and oil-water separation phenomenon will generally not occur when the strong emulsion is placed for long time.

Laboratory studies have shown that, in oil-water emulsions, whether having a form of water-in-oil or oil-in-water, a solid suspension referred as an emulsion nucleus exists in each oil-water emulsion. The emulsion nucleus has a diameter ranging from 0.05 µm to 1200 µm and a specific gravity ranging from 1.2 g/cm³ to 2.8 g/cm³. The relationships between the diameter and the specific gravity of the solid suspension and the stability of the emulsion, between the physicochemical properties of the oil products and the stability of the emulsion, and between the physicochemical properties of the water and the stability of the emulsion are all complicated. It is extremely hard to use surfactant-based demulsifiers to treat aged oil, and the surfactant-based demulsifiers always target specific aged oil and are extremely unstable. After pretreatment with strong acid and strong alkali, the efficacy of some specific demulsifiers can be improved to a certain level, but new technical problems may be caused due to the treatment of the wastewater causing a secondary pollution.

The specific gravity of the aged oil is greater than that of the oil and smaller than that of the water. The aged oil is located at the oil-water interface in the three-phase separator. In the oil-water separation process, only when the proportion of the total solid suspensions is lower than a predetermined range (depending on the oil products), the demulsifier is effective. After the demulsification is realized by the demulsifier, the emulsion nucleuses generally enter the oil phase, while the emulsion nucleuses with relatively large particle sizes may enter the water phase, which will affect the content of oil in water (OIW). In summary, as long as the solid suspension regarded as the emulsion nucleus can be effectively removed, the oil-water emulsification problem will be solved smoothly. The current treating devices and processes need to be further improved.

Documents considered to be relevant include US 4707275A (FILO JORGE H) 17 November 1987.

US 2002/003115 A1 (CONAWAY LAWRENCE M) 10 January 2002.

CN 102039301A (UNIV KUNMING SCIENCE & TECH) 4 May 2011.

CN 101602566A (BEIJING HUIBOPU ENERGY TECHNOL) 16 December 2009.

CN 103013557A (BEIJING HBP ENERGY TECHNOLOGY CO LTD) 3 April 2013.

CN 105417906A (LI ZHUN) 23 March 2016.

WO 2017/196234A1 (RECONDOII, SWEDEN AB) 16 November 2017.

US 4707275A discloses a process for treating a fuel oil feedstock that is contaminated with water and a large amount of small particles. Centrifugal separators, mixing tanks and filter presses are used in accordance with a two step separation scheme that permits recovery of a final reject that can be directly disposed of and a treated oil that can be utilized directly as a fuel or that can undergo further treatment is obtained.

### Summary

The objective of the present invention is to overcome the deficiencies of the prior art, and to provide a slop oil treating device according to claim 1.

The present invention is achieved by the following technical solutions.

A slop oil treating device includes a pretreatment device, a solid-liquid separator, a demulsification nucleus-increasing treating device, a squeezing filter press, a three-phase separator, a buffer tank, a feeding pump, a circulating pump, a conveying pump, and an outputting pump. Slop oil in an oil tank is delivered to the pretreatment device through the feeding pump for pre-treatment. The slop oil is subjected to a pre-heating at a temperature ranging from 90°C to 92°C in the pretreatment device, and then conveyed to the solid-liquid separator for separation. Solid residue obtained after a first-stage separation enters the squeezing filter press for solid-liquid squeezing. The squeezing filter press discharges the squeezed solid residue, and conveys the squeezed waste water to the demulsification nucleus-increasing treating device, and then the squeezed waste water is conveyed to the pretreatment device through the circulating pump. The oil and water after the first-stage separation enter the three-phase separator for a second-stage high-speed centrifugal separation. The oil separated by the three-phase separator is conveyed to the buffer tank, and conveyed to a storage tank through the outputting pump. The water separated by the three-phase separator is conveyed to a waste water treatment workshop for processing. The emulsion separated by the three-phase separator is conveyed to the demulsification nucleus-increasing treating device for a nucleus-increasing treatment, and then returned to the pretreatment device and the solid-liquid separator.

Further, a regulating valve A is mounted on a slop oil conveying pipe, and the regulating valve A is configured to regulate a flow rate through the feeding pump.

Further, a regulating valve B is mounted on a steam conveying pipe, and the regulating valve B is configured to regulate a flow rate of steam conveyed to the pretreatment device.

Further, a gate valve is mounted in parallel between the pretreatment device and the slop oil conveying pipe.

Further, after a squeezing is performed by the squeezing filter press, the solid residue discharged has a water content of less than 65%, and an oil content of less than 2-3%.

Further, after a separation of the three-phase separator, basic sediment and water (BS&W) in the oil is 0.6-1.5%, and oil in water (OIW) concentration of the water is 55-150 ppm.

After a treatment of the solid-liquid separator, more than 96-99% of solid impurities in the slop oil can be removed. After entering the squeezing filter press, the solid residue is firstly dewatered under a positive pressure intensity by the squeezing filter press, which is also called slurry dewatering. Namely, a predetermined number of filter plates are closely arranged in a row under an action of strong mechanical force, and filter chambers are formed between surfaces of the filter plates. The material to be filtered is conveyed into the filter chamber under a strong positive pressure. A solid portion of the material to be filtered entering the filter chamber is trapped by a filter medium to form a filter cake, and a liquid portion is discharged from the filter chamber through the filter medium, thereby achieving the purpose of the solid-liquid separation. As the positive pressure intensity increases, the solid-liquid separation becomes more thorough.

The separation using the three-phase separator belongs to the second-stage separation. The separation of the three-phase separator is a high-speed centrifugal separation of oil and water. The second-stage separation brings three products: oil, water and emulsion.

After the first-stage treatment of the slop oil and then placing it for a predetermined time, a preliminary oil-water separation may also be achieved. The oil in water (OIW) concentration of the separated water can reach below 250 ppm, and the water content in the oil phase is between 7% and 15%. The composition of the solid impurities obtained in the first-stage separation is related to the characteristics of the slop oil, wherein the content of the free-state crude oil is equal to or less than 1.2% to 2.5%(by weight), the water content is 75% to 85% (by weight), and the organic matter content in the solid is between 25% and 35%. After the squeezing and filtering treatment, the water content of the solid residue can reach less than 65%. A mixture of the solid residue and a part of the treated oil can enter the coking production line as a raw material to avoid hazardous waste treatment. The water content of the oil phase from the outlet of the second-stage treatment ranges from 0.6% to 1.5%. With the change of the oil products, the oil inorganic solid content (excluding coke powder) is less than 0.8%, and the oil in water (OIW) concentration of the water ranges from 80 to 500 ppm, which is also related to the oil products.

Compared with the prior art, the advantages of the present invention are as follows. The present invention is designed in combination with the existing process conditions at the production site, corresponding changes are made according to different oil products and on-site process conditions, and the operating parameters are adjusted on the spot for different oil products. The optimum temperature of the pre-heating of the slop oil is 90-92°C, the back pressures of the receiving ends of the oil phase and the water phase should be less than 0.2 MPa (30 PSI), the inlet pressure of the slop oil is 0.2-0.4 MPa (30-60 psi), and the processing capacity of single device can reach 8-12m³/h.

### Brief Description of the Drawings

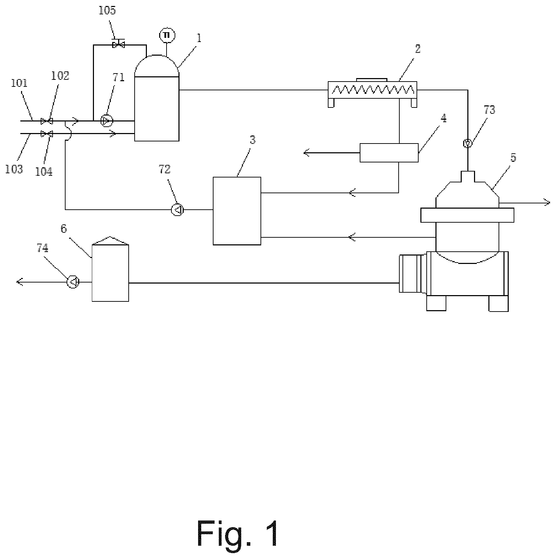

Fig. 1 is a structural schematic diagram of the present invention.

### Detailed Description of the Embodiments

In order to make the objectives, technical solutions, and advantages of present invention clearer and more definite, the present invention will be further described in detail below in combination with the accompanying drawings and embodiments. It should be understood that the specific embodiments described herein are merely used to illustrate the present invention, and are not intended to limit the present invention.

The slop oils that appear in the petroleum and petrochemical industries have a common feature, namely, the oil-water mixture contains a large amount of sludge and solid impurities. It also confirms the research on the related emulsification mechanism in the laboratory from one aspect. The solid impurities such as sludge in slop oil has many sources. At present, the main sources of pollution in the domestic petroleum and petrochemical industry are listed as follows. First, muddy sand in the oil-producing stratum, it is directly related to the characteristics of the stratum and the success or failure of the well completion sand control; second, polymer flooding process in oil fields, it causes the polymer residue to enter the production fluid; third, well completion fluid, well killing fluid, newly-opened oil well production fluid, etc. of the oil fields are mixed into the production fluid. Due to the increased environmental protection requirements and supervision level, the oily sludge water in the oil field is mixed into the production liquid, and the final treatment pressure is transferred to the oil refining process. For the first two sources, slop oil will be continuously produced in the oil refining factory, which generally appears in the oil skimming processing tank of the wastewater treatment plant, or is stored at the bottom of the crude oil storage tank. The slop oil of the third source is produced due to irregular accidents of electric dehydration in the refining factory.

Referring to Fig. 1, Fig. 1 is a structural schematic diagram of the present invention.

The slop oil treating device includes the pretreatment device 1, the solid-liquid separator 2, the demulsification nucleus-increasing treating device 3, the squeezing filter press 4, the three-phase separator 5, the buffer tank 6, the feeding pump 71, the circulating pump 72, the conveying pump 73, and the outputting pump 74. Slop oil in an oil tank is delivered to the pretreatment device 1 through the feeding pump 71 for pre-treatment. The slop oil is subjected to a pre-heating at a temperature ranging from 90°C to 92°C in the pretreatment device 1, and conveyed to the solid-liquid separator 2 for separation. Solid residue obtained after a first-stage separation enters the squeezing filter press 4 for solid-liquid squeezing. The squeezing filter press 4 discharges the squeezed solid residue, and conveys the squeezed waste water to the demulsification nucleus-increasing treating device 3, and then the squeezed waste water is conveyed to the pretreatment device 1 through the circulating pump 72. Oil and water, after the first-stage separation, enter the three-phase separator 5 for second-stage high-speed centrifugal separation. Oil separated by the three-phase separator 5 is conveyed to the buffer tank 6, and conveyed to a storage tank through the outputting pump 74, water separated by the three-phase separator 5 is conveyed to a waste water treatment workshop for processing, and emulsion separated by the three-phase separator 5 is conveyed to the demulsification nucleus-increasing treating device 3 for a nucleus-increasing pretreatment, and then returned to the pretreatment device 1 and the solid-liquid separator 2.

The regulating valve A 102 is mounted on the slop oil conveying pipe 101, and the regulating valve A 102 is configured to regulate a flow rate through the feeding pump 71. The regulating valve B 104 is mounted on the steam conveying pipe 103, and the regulating valve B 104 is configured to regulate a flow rate of steam conveyed to the pretreatment device 1. The gate valve 105 is mounted in parallel between the pretreatment device 1 and the slop oil conveying pipe 101.

After a squeezing is performed by the squeezing filter press 4, the solid residue discharge has a water content of less than 65%, and an oil content of less than 2-3%. After separation of the three-phase separator 5, basic sediments and water (BS& W) of the oil is 0.6-1.5%, and oil in water (OIW) concentration of the water is 55-150 ppm.

After a treatment of the solid-liquid separator 2, more than 96-99% of solid impurities in the slop oil can be removed. After entering the squeezing filter press 4, the solid residue is firstly dewatered under a positive pressure intensity by the squeezing filter press 4, which is also called slurry dewatering. Namely, a predetermined number of filter plates are closely arranged in a row under an action of strong mechanical force, filter chambers are formed between surfaces of the filter plates, the material to be filtered is conveyed into the filter chamber under a strong positive pressure. The solid portion of the material to be filtered entering the filter chamber is trapped by a filter medium to form a filter cake, and the liquid portion is discharged from the filter chamber through the filter medium, thereby achieving the purpose of the solid-liquid separation. As the positive pressure intensity increases, the solid-liquid separation becomes more thorough.

The separation using the three-phase separator 5 belongs to the second-stage separation. The separation of the three-phase separator 5 is a high-speed centrifugal separation of oil and water. The second-stage separation brings three products: the oil having a BS&W of 0.6-1.5%, the water having an OIW of 55-150 ppm, and the emulsion having a BS&W of 5-12%. The contents of the three products are related to the oil products.

After the first-stage treatment of the slop oil and then placing for a predetermined time, a preliminary oil-water separation may also be achieved. The oil in water (OIW) concentration of the separated water can reach below 250 ppm, and the water content in the oil phase is between 7% and 15%. The composition of the solid impurities obtained in the first-stage separation is related to the characteristics of the slop oil, wherein the content of the free-state crude oil is equal to or less than 1.2% to 2.5% (by weight), the water content is 75% to 85% (by weight), and the organic matter content in the solid is between 25% and 35%. After the squeezing and filtering treatment, the water content of the solid residue can reach less than 65%. A mixture of the solid residue and a part of the treated oil can enter the coking production line as a raw material to avoid hazardous waste treatment. The water content of the oil phase from the outlet of the second-stage treatment ranges from 0.6% to 1.5%. With the change of the oil products, the oil inorganic solid content (excluding coke powder) is less than 0.8%, and the oil in water (OIW) concentration of water phase ranges from 80 ppm to 500 ppm, which is related to the oil products as well.

The present invention is designed in combination with the existing process conditions at the production site, corresponding changes are made according to different oil products and on-site process conditions, and the operating parameters are adjusted on the spot for different oil products as well. The optimum temperature of the pre-heating of the slop oil is 90-92°C, the back pressures of the receiving ends of the oil phase and the water phase should be less than 0.2 MPa (30 PSI), the inlet pressure of the slop oil is 0.2-0.4 MPa (30-60 psi), and the processing capacity of the single device can reach 8-12m³/h.

The above descriptions are merely the preferred embodiments of the present invention, and are not intended to limit the present invention.

## Claims

1. A slop oil treating device, comprising: a pretreatment device (1), a solid-liquid separator (2), a demulsification nucleus-increasing treating device (3), a squeezing filter press (4), a three-phase separator (5), a buffer tank (6), a feeding pump (71), a circulating pump (72), a conveying pump (73), and an outputting pump (74); wherein,
the feeding pump (71) is connected to the pretreatment device (1), slop oil which comprises an emulsified oil-water mixture in an oil tank is delivered to the pretreatment device (1) through the feeding pump (71) for a pre-treatment;
the pretreatment device (1) is connected to the solid-liquid separator (2), the slop oil is subjected to a pre-heating at a temperature ranging from 90°C to 92°C in the pretreatment device (1), and conveyed to the solid-liquid separator (2) for a first-stage separation;
the squeezing filter press (4) is connected to the solid-liquid separator (2) and the emulsification nucleus-increasing treating device (3), respectively, the circulating pump (72) is connected to the emulsification nucleus-increasing treating device (3) and the pretreatment device (1), respectively, a solid residue after the first-stage separation enters the squeezing filter press (4) for a solid-liquid squeezing; the squeezing filter press (4) discharges a squeezed solid residue and conveys squeezed waste water to the demulsification nucleus-increasing treating device (3), and then the squeezed waste water is conveyed to the pretreatment device (1) through the circulating pump (72); and
the three-phase separator (5) is connected to the conveying pump (73), the demulsification nucleus-increasing treating device (3) and the buffer tank (6), respectively, the conveying pump (73) is connected to the solid-liquid separator (2), the outputting pump (74) is connected to the buffer tank (6), an oil and water mixture after the first-stage separation enters the three-phase separator (5) for a second-stage high-speed centrifugal separation; an oil separated by the three-phase separator (5) is conveyed to the buffer tank (6), and conveyed to a storage tank through the outputting pump (74), water separated by the three-phase separator (5) is conveyed to a waste water treatment workshop for a processing, and an emulsion separated by the three-phase separator (5) is conveyed to the demulsification nucleus-increasing treating device (3) for a nucleus-increasing pretreatment, and then returned to the pretreatment device (1) and the solid-liquid separator (2), **characterized in that**
the solid-liquid separator (2) is located downstream of and connected to the pretreatment device (1), the three-phase separator (5) is located downstream of and connected to the solid-liquid separator (2), the demulsification nucleus-increasing treating device (3) is located downstream of and connected to both the solid-liquid separator (2) and the three-phase separator (5), and the squeezing filter press (4) is connected between the solid-liquid separator (2) and the demulsification nucleus-increasing treating device (3).

2. The slop oil treating device of claim 1, **characterized in that** a regulating valve A (102) is mounted on a slop oil conveying pipe (101), and the regulating valve A (102) is configured to regulate a flow rate through the feeding pump (71).

3. The slop oil treating device of claim 2, **characterized in that** a regulating valve B (104) is mounted on a steam conveying pipe (103), and the regulating valve B (104) is configured to regulate a flow rate of steam conveyed to the pretreatment device (1).

4. The slop oil treating device of claim 3, **characterized in that** a gate valve (105) is mounted in parallel between the pretreatment device (1) and the slop oil conveying pipe (101).

## Patentansprüche

1. Rückstandsölbehandlungsvorrichtung, umfassend: eine Vorbehandlungsvorrichtung (1), einen Fest-Flüssig-Trenner (2), eine Demulgierungskernvergrößerungsbehandlungsvorrichtung (3), eine Membranfilterpresse (4), einen Dreiphasentrenner (5), einen Pufferbehälter (6), eine Speisepumpe (71), eine Zirkulationspumpe (72), eine Förderpumpe (73) und eine Ausgabepumpe (74), wobei
die Speisepumpe (71) mit der Vorbehandlungsvorrichtung (1) verbunden ist und Rückstandsöl, das eine emulgierte Öl-Wasser-Mischung in einem Ölbehälter enthält, der Vorbehandlungsvorrichtung (1) durch die Speisepumpe (71) für eine Vorbehandlung zugeführt wird;
die Vorbehandlungsvorrichtung (1) mit dem Fest-Flüssig-Trenner (2) verbunden ist und das Rückstandsöl in der Vorbehandlungsvorrichtung (1) bei einer Temperatur von 90 °C bis 92 °C vorgeheizt und anschließend zum Fest-Flüssig-Trenner (2) für eine Trennung der ersten Stufe geleitet wird;
die Membranfilterpresse (4) jeweils mit dem Fest-Flüssig-Trenner (2) und der Demulgierungskernvergrößerungsbehandlungsvorrichtung (3) verbunden ist, die Zirkulationspumpe (72) jeweils mit der Demulgierungskernvergrößerungsbehandlungsvorrichtung (3) und der Vorbehandlungsvorrichtung (1) verbunden ist, ein fester Rückstand nach der Trennung der ersten Stufe in die Membranfilterpresse (4) für die Fest-Flüssig-Trennung per Pressen gelangt, die Membranfilterpresse (4) einen gepressten festen Rückstand ablässt und gepresstes Abwasser zur Demulgierungskernvergrößerungsbehandlungsvorrichtung (3) leitet und das gepresste Abwasser anschließend durch die Zirkulationspumpe (72) zur Vorbehandlungsvorrichtung (1) geleitet wird, und
der Dreiphasentrenner (5) jeweils mit der Förderpumpe (73) der Demulgierungskernvergrößerungsbehandlungsvorrichtung (3) und dem Pufferbehälter (6) verbunden ist, die Förderpumpe (73) mit dem Fest-Flüssig-Trenner (2) verbunden ist, die Ausgabepumpe (74) mit dem Pufferbehälter (6) verbunden ist, eine Öl-und-Wasser-Mischung nach der Trennung der ersten Stufe in den Dreiphasentrenner (5) für eine Hochgeschwindigkeitszentrifugaltrennung der zweiten Stufe gelangt, ein vom Dreiphasentrenner (5) getrenntes Öl zum Pufferbehälter (6) geleitet wird und durch die Ausgabepumpe (74) zu einem Speicherbehälter geleitet wird, das vom Dreiphasentrenner (5) getrennte Wasser zur Aufbereitung zu einer Abwasserbehandlungsanlage geleitet wird und eine vom Dreiphasentrenner (5) getrennte Emulsion für eine Kernvergrößerungsbehandlung zur Demulgierungskernvergrößerungsbehandlungsvorrichtung (3) geleitet und anschließend zurück zur Vorbehandlungsvorrichtung (1) und zum Fest-Flüssig-Trenner (2) geleitet wird, **dadurch gekennzeichnet, dass**
der Fest-Flüssig-Trenner (2) stromabwärts der Vorbehandlungsvorrichtung (1) befindlich und mit dieser verbunden ist, der Dreiphasentrenner (5) stromabwärts des Fest-Flüssig-Trenners (2) befindlich und mit diesem verbunden ist, die Demulgierungskernvergrößerungsbehandlungsvorrichtung (3) stromabwärts sowohl des Fest-Flüssig-Trenners (2) als auch des Dreiphasentrenners (5) befindlich und mit diesen verbunden ist und die Membranfilterpresse (4) zwischen dem Fest-Flüssig-Trenner (2) und der Demulgierungskernvergrößerungsbehandlungsvorrichtung (3) verbunden ist.

2. Rückstandsölbehandlungsvorrichtung nach Anspruch 1, **dadurch gekennzeichnet, dass** ein Regelventil A (102) an einer Rückstandsölförderleitung (101) montiert ist und das Regelventil A (102) ausgelegt ist, um einen Förderstrom durch die Speisepumpe (71) zu regeln.

3. Rückstandsölbehandlungsvorrichtung nach Anspruch 2, **dadurch gekennzeichnet, dass** ein Regelventil B (104) ist an einer Dampfförderleitung (103) montiert ist und das Regelventil B (104) ausgelegt ist, um einen Förderstrom von Dampf, der zur Vorbehandlungsvorrichtung (1) geleitet wird, zu regeln.

4. Rückstandsölbehandlungsvorrichtung nach Anspruch 3, **dadurch gekennzeichnet, dass** Absperrventil (105) parallel zwischen der Vorbehandlungsvorrichtung (1) und der Rückstandsölförderleitung (101) montiert ist.

## Revendications

1. Dispositif de traitement d'huiles de rejet, comprenant : un dispositif de pré-traitement (1), un séparateur solide-liquide (2), un dispositif de traitement d'augmentation de noyau de désémulsification (3), une presse de filtre-presse (4), un séparateur à trois phases (5), un réservoir tampon (6), une pompe d'alimentation (71), une pompe de circulation (72), une pompe de transfert (73) et une pompe de sortie (74) ; dans lequel,
la pompe d'alimentation (71) est reliée au dispositif de pré-traitement (1), les huiles de rejet qui comprennent un mélange huile-eau émulsifié dans un réservoir d'huile est délivrée au dispositif de pré-traitement (1) à travers la pompe d'alimentation (71) en vue d'un pré-traitement ;
le dispositif de pré-traitement (1) est relié au séparateur solide-liquide (2), les huiles de rejet sont soumises à un préchauffage à une température allant de 90°C à 92°C dans le dispositif de pré-traitement (1), et transférées vers le séparateur solide-liquide (2) en vue d'une séparation de premier étage ;
la presse de filtre-presse (4) est reliée au séparateur solide-liquide (2) et au dispositif de traitement augmentant le noyau de désémulsification (3), respectivement, la pompe de circulation (72) est reliée au dispositif de traitement d'augmentation de noyau de désémulsification (3) et au dispositif de pré-traitement (1), respectivement, un résidu solide après la séparation de premier étage entre dans la presse de filtre-presse (4) en vue d'un pressage solide-liquide ; la presse de filtre-presse (4) évacue un résidu solide pressé et transfert les eaux usées pressées vers le dispositif de traitement augmentant le noyau de désémulsification (3), puis l'eau usée pressée est transférée vers le dispositif de pré-traitement (1) à travers la pompe de circulation (72) ; et
le séparateur à trois phases (5) est relié à la pompe de transfert (73), au dispositif de traitement augmentant le noyau de désémulsification (3) et au réservoir tampon (6), respectivement, la pompe de transfert (73) est reliée au séparateur solide-liquide (2), la pompe de sortie (74) est reliée au réservoir tampon (6), un mélange d'huile et d'eau après la séparation de premier étage entre dans le séparateur à trois phases (5) en vue d'une séparation centrifuge à grande vitesse de second étage ; une huile séparée par le séparateur à trois phases (5) est transférée vers le réservoir tampon (6), et transférée vers un réservoir de stockage à travers la pompe de sortie (74), l'eau séparée par le séparateur à trois phases (5) est transférée vers une unité de traitement des eaux usées en vue d'un traitement, et une émulsion séparée par le séparateur à trois phases (5) est transférée vers le dispositif de traitement augmentant le noyau de désémulsification (3) en vue d'un pré-traitement augmentant le noyau, puis renvoyé au dispositif de pré-traitement (1) et au séparateur solide-liquide (2), **caractérisé en ce que**
le séparateur solide-liquide (2) est situé en aval de et relié au dispositif de pré-traitement (1), le séparateur à trois phases (5) est situé en aval de et relié au séparateur solide-liquide (2), le dispositif de traitement augmentant le noyau de désémulsification (3) est situé en aval de et relié à chacun du séparateur solide-liquide (2) et du séparateur à trois phases (5), et la presse de filtre-presse (4) est reliée entre le séparateur solide-liquide (2) et le dispositif de traitement augmentant le noyau de désémulsification (3).

2. Dispositif de traitement d'huiles de rejet selon la revendication 1, **caractérisé en ce qu'**une vanne de régulation (102) est montée sur une conduite de transfert d'huiles de rejet (101), et la vanne de régulation (102) est configurée pour réguler un débit à travers la pompe d'alimentation (71).

3. Dispositif de traitement d'huiles de rejet selon la revendication 2, **caractérisé en ce qu'**une vanne de régulation B (104) est montée sur une conduite de transfert de vapeur (103), et la vanne de régulation B (104) est configurée pour réguler un débit de vapeur transférée vers le dispositif de pré-traitement (1).

4. Dispositif de traitement d'huiles de rejet selon la revendication 3, **caractérisé en ce qu'**une vanne d'arrêt (105) est montée en parallèle entre le dispositif de pré-traitement (1) et la conduite de transfert d'huiles de rejet (101).
